# EUROPEAN PATENT SPECIFICATION

(11) **EP 1 750 050 B1**
(45) Date of publication and mention of the grant of the patent: **07.01.2009**
(21) Application number: 06252325.3
(22) Date of filing: 02.05.2006
(51) Int. Cl.: F16M 11/04

(54) **Stand for display device**
Ständer für Anzeigevorrichtung
Support pour dispositif de visualisation

(30) Priority: 04.08.2005 KR 20050071466
(43) Date of publication of application: 07.02.2007
(73) Proprietor: LG Electronics Inc., Youngdungpo-Gu Seoul (KR)
(72) Inventor: Baek, Jin Uk, Kyungsangbook-do, 730-727 (KR)
(74) Representative: Camp, Ronald

(56) References cited:
- EP-A- 1 505 333
- EP-A2- 1 312 851
- US-A1- 2003 122 046
- US-A1- 2005 051 692
- US-B2- 6 822 857

## Description

The present invention relates to a stand of a display device. It particularly relates to stands capable of operating both as a desk-type stand and a wall-mounted type stand. More particularly, the present invention relates to a stand of a visual display device. Since the stand can be changed between a desk-type and a wall-mounted type in accordance with its operational state, it is possible to prevent an operational capacity of the stand from being decreased when tensioning and relaxing of the springs are repeatedly performed, to conveniently perform the operations of the wall-mounted stand and to reliably maintain a fixed state of the folded stand.

A stand generally comprises a supporting portion locating at a rear surface of a main body of a display device on which an image can be displayed, a base portion locating at the supporting portion such as a bottom or a wall and a link portion connecting the base portion and the supporting portion.

The lower portion of the link portion is supported to be vertically rotatable at a pair of fixed brackets connected to a base portion. The supporting portion is connected to a rear surface of a main body of the display device by a hinge for the main body of the display device to be tilted.

Recent practice is to install an auxiliary link at the side of the link portion in order to retain the link portion to be rotated. In general, the auxiliary link is formed to have two links in parallel, and a spring is arranged between the two links.

Operation of the spring will now be described. The spring maintains its original state while the stand sets with respect to a vertical face. The spring becomes tensioned if the stand is folded, and the spring continues to maintain its tension. If the stand is fixed in the folded state, the spring continues to maintain its tension. If the stand is unfolded, an auxiliary link is pulled by a restoring force of the spring, therefore the stand rapidly returns to a state of setting with respect to a vertical surface.

The spring formed on the auxiliary link portion is connected between a link member and a link member. Therefore, if the stand is folded, both ends of a tension spring are configured to become extended.

If the stand remains for a long time in a folded state in which both ends of the tension spring are extended, the elastic limit of the tension spring can become exceeded and the spring may remain the extended state. Accordingly, the elastic force of the tension spring may become degraded. Therefore, when used as a desk-type stand, the stand does not appropriately apply restoring force if the tension spring is in the plastically-deformed state, resulting in inconvenience of movements of the stand. This problem may occur even when the stand is used as a desk-type stand and a weight is applied to the tension spring, because a user often adjusts the height of the stand.

In addition, the stand includes a fixing device for fixing the stand in a folded state. The fixing device is provided in an inner portion of a base portion of the stand. Therefore, if the stand is folded, the fixing device becomes engaged with a connecting portion formed at an end of the link portion and the folded state of the link portion becomes fixed. In order to disassemble the fixing device, the user pulls a disassemble lever at a lower portion of the stand to disassemble a fixing device coupled with a connecting portion of the link portion.

However, the conventional fixing devices need to be additionally formed at the base of a stand, and the costs for manufacturing required for configuring the base portion are increased.

In addition, in order to change the stand from the folded state, additional operations such as pulling a disassembling device lever are required, and this may cause inconvenience to users.

European patent application EP 1 505 333 A2 discloses a monitor having a monitor body to display a picture, and a base member to support the monitor body. The monitor includes a link member provided between the monitor body and the base member; a base hinge to rotatably connect the link member and the base member to enable the link member to rotate relative to a surface of the base member; a monitor hinge spaced from the base hinge to rotatably combine the link member and the monitor body; and a rotating limiter provided between the link member and the base member to prevent a lower part of the monitor body from making contact with the base member or an installing surface of the base member when the link member rotates against the base member. Accordingly, the monitor according to an aspect of the present invention prevents the lower part of the monitor body from making contact with the base member when the height of the monitor body is adjusted, and is convenient to use as the monitor body can be tilted relative to the base member. Further, package size of the monitor is reduced to decrease transportation expense upon delivery because the monitor body can be folded to be parallel to the base member.

The present invention seeks to provide an improved stand.

Embodiments of the invention can provide a stand capable of preventing the power of tension springs from being degraded in an auxiliary link even when an excess weight is repeatedly applied to a spring such as in a case where a stand remains folded for a long time.

In addition, embodiments of the invention can provide a stand to which a main link is automatically fixed without installing an additional fixing device to the base portion in order to fix the main link of the stand, if the stand is folded.

Furthermore, embodiments of the invention can provide a stand with a simple configuration having a high product reliability to improve the convenience of a user.

One aspect of the invention provides a stand of a display device in accordance with claim 1.

Other aspects of the invention are defined in the sub-claims.

It is possible to prevent a tension spring from being degraded in the folded state even when a stand remains folded for a long period due to the configuration of the embodiments of the present invention. In addition, if the stand is folded, a main spring of the stand can be fixed itself to simplify the structure of the stand and the stand can be folded and disassembled conveniently.

In addition, a stand can be conveniently used by the configuration suggested as above and the operational reliability of the stand is improved when the user operates the stand.

Embodiments of the invention will now be described by way of non-limiting example only with reference to the drawings, in which:

Fig. 1 is a perspective view of a stand of a display device in accordance with the present invention;

Fig. 2 is a disassembled perspective view of a main link portion and an auxiliary portion of the stand in accordance with the present invention;

Fig. 3 is a side view showing operations of a main spring of the stand in accordance with the present invention;

Fig. 4 is a disassembled perspective view of a folding stopper of the stand in accordance with the present invention;

Fig. 5 is a front view showing an assembled state of the folding stopper of the stand in accordance with the present invention;

Fig. 6 is a view showing a state before the folding stopper is operated in accordance with the present invention; and

Fig. 7 is a view showing a state after the folding stopper is operated in accordance with the present invention.

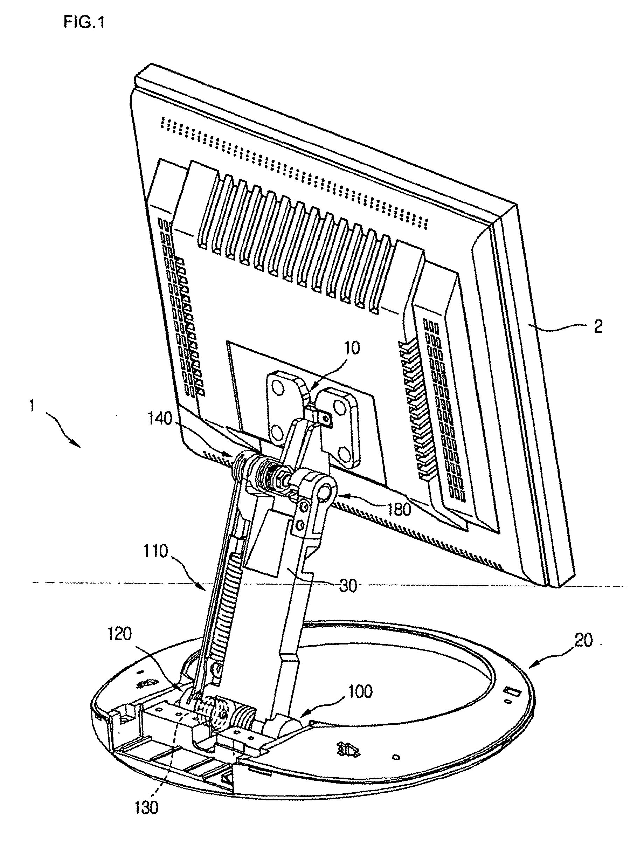

Referring now to Fig. 1, a stand comprises: a supporting portion 10 fixed at a rear surface of a visual display device 2 such as an LCD monitor to support the visual display device 2, a base portion 20 for mounting the visual display device 2 at a bottom surface and a main link 30 of which both ends are rotatably connected to the supporting portion 10 and the base portion 20. In addition, an auxiliary link portion 110 connected between the supporting portion 10 and the base portion 20 is positioned at a side of the main link 30, shown as the left side in the view of Fig. 1. The base portion 20 includes a folding stopper 130 provided at a bottom surface of the auxiliary link portion 110 so as to fix the folded state of the main link 30.

More particularly, the supporting portion 10 is rotatably connected to the main link 30 by the first link hinge portion 180 and the second hinge portion 140. In addition, the main link 30 is rotatably connected to the base portion 20 by the first base hinge portion 100 and the second base hinge portion 120.

In addition, the respective ends of the auxiliary link portion 110 are arranged to be connected with the second link hinge portion 140 and the first auxiliary link hinge portion located in the second base hinge portion 120. A spring of which one end is connected to the main link 30 and the other end is connected to a side surface of the auxiliary link is provided in the auxiliary link portion 110.

Furthermore, a folding stopper 130 is provided in the second base hinge portion 120 for maintaining the folded state of the main link 30 when the main link 30 is folded. A detailed configuration and operation of the folding stopper 130 will be described later.

Operation of the stand of the display device will now be briefly described.

The main link 30 is operated as an implement supporting the weight of the display device 20 and performs the function of supporting the weight. In addition, the auxiliary link portion 110 is operated as a quadric crank link system (quadric link) such that the second base hinge portion 120 and the second link hinge portion 140 maintain their relative attitude. Therefore, the display device 20 maintains a uniform angle even though a user lowers the display device 20, and it is advantageous that a user can see the display device 20 with the same angle due to the above operational features.

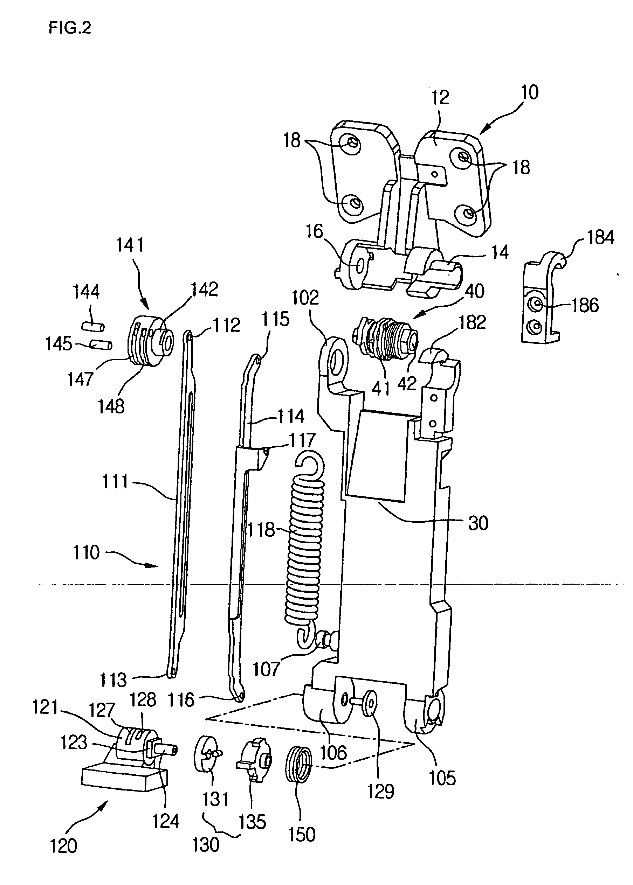

Meanwhile, a spring (118 of Fig. 2) is provided, respective ends of which are positioned at the auxiliary link portion 110 and the main link 30 and a rotational force acting in one direction is applied by the spring 118 to the auxiliary link portion 110 configuring a quadric link, for example, a force tending to move the display device 20 upwardly. Therefore, a user can move the display device 20 conveniently with the same force upwardly or downwardly.

In addition, when a user uses the stand as a wall-mounting type, the main link 30 is completely folded because the folding stopper 130 functions as the main link 30. Therefore, it is advantageous that when the main link 30 and the auxiliary link 110 are folded without additionally fixing the main link 30, the folded state is maintained.

Fig. 2 is a perspective view where the configurations of the supporting portion 10, the main link 30 and the auxiliary link portion 110 are illustrated in a disassembled state in a stand structure of a display device.

Referring to Fig. 2, the supporting portion 10 includes a display device supporting part 12 fixed at a rear surface of the display device 2. The display device 2 has been omitted from Fig. 2 for clarity. A plurality of display device coupling holes are formed at the display device supporting part 12, and coupling members such as screws (not shown) extend through the display device coupling holes 18, thereby securing the display device supporting part 12 to a rear surface of the display device 2.

A first hinge shaft 14 configuring the first link hinge shaft 180 with respect to the main link 30 is formed, and a second hinge hole 16 to which the second link hinge shaft 42 configuring the second link hinge portion 140 is inserted, is formed at a lower portion of the supporting part 12.

The first hinge shaft 14 is mounted at the first hinge receiving portion 182 of the main link 30 with a common center. The first hinge coupling member 184 is connected in the first hinge receiving portion 182, thereby fixing the display device supporting part 12 rotatably at a position with respect to the main link 30. In other words, the display device connected to the display device supporting part 12 can be additionally rotated with respect to the main link 30.

The second hinge spring member 40 is equipped in the inner portion of the second hinge hole 16. The second hinge spring 41 for tilting the supporting portion 10 and the second hinge shaft 42 configuring a hinge shaft of the second link hinge portion 140 are included in the second hinge spring member 40.

An end of the second hinge shaft 42 penetrates the second hinge shaft receiving portion 102 formed at an upper end of the main link 30 to be connected with the second link supporting shaft 142 extending from an inner portion of the second auxiliary link supporting portion 141.

The second auxiliary link receiving portions 147 and 148 for receiving the ends of the two auxiliary links 111 and 114 provided at a side of the main link 30 are formed in the second auxiliary link supporting portion 141. Preferably, but not essentially, the two auxiliary links 111 and 114 are parallel.

Meanwhile, the rotational center of the two auxiliary links 111 and 114 is offset from the rotational center of the main link 30 in parallel by a predetermined distance. In other words, the auxiliary links 111 and 114 are connected to the second auxiliary link supporting portion 141 by a hinge at the opposite points with respect to the rotational center of the main link 30. The auxiliary links 111 and 114 perform roles as two links providing a quadrilateral link due to the above relationship. In order to obtain the above, respective one ends of the two auxiliary links 111 and 114 are rotatably fixed to the second auxiliary link supporting portion 141 by the second auxiliary link fixing shafts 144 and 145.

In addition, penetrating holes 113 and 116 are formed at the respective other ends of the two auxiliary links 111 and 114. The auxiliary links 111 and 114 are connected to the first auxiliary link supporting portion 121 through the penetrating holes 113 and 116 by a hinge. In addition, the first base hinge receiving hole 105 and the second base hinge receiving hole 106 for rotatably connecting the main link to the base portion 20 are formed at a lower portion of the main link 30.

Furthermore, the respective first auxiliary link receiving holes 127 and 128 for receiving the two auxiliary links 111 and 114 are formed in the first auxiliary link supporting portion 121. The respective other ends of the two auxiliary links 111 and 114 are rotatably fixed in the first auxiliary link receiving portions 127 and 128 by the first auxiliary link fixing shafts 125 and 126.

In addition, the second base hinge portion 120 for fixing the main link 30 to the base portion 20 by a hinge is positioned in an inner portion of the first auxiliary link receiving portions 127 and 128. A folding stopper 130 for limiting rotation of the main link 30 is formed in the second base hinge portion 120 when the main link 30 is folded. The folding stopper 130 will be described in detail.

Meanwhile, a main spring 118 is provided in an inner portion of the first auxiliary link 114 close to main link 30 of the two auxiliary links 111 and 114. One end of the main spring 118 is engaged on the second main spring protrusion 117 formed in the inner upper portion of the first auxiliary link 114, and the other end of the main spring 118 is engaged on the first main spring protrusion 107 formed at a lower side face of the main link 30.

As described above, the respective ends of the main spring 118 are connected with the first auxiliary link 114 and the main link 30, respectively to apply a pulling force. However, the length of the main spring 118 becomes gradually increased when the main link 30 is folded, and the length of the main spring 118 becomes gradually decreased when the main link 30 is unfolded. Finally, the main link 30 is always applied with a force in the direction of unfolding the main link 30 in the main spring 118.

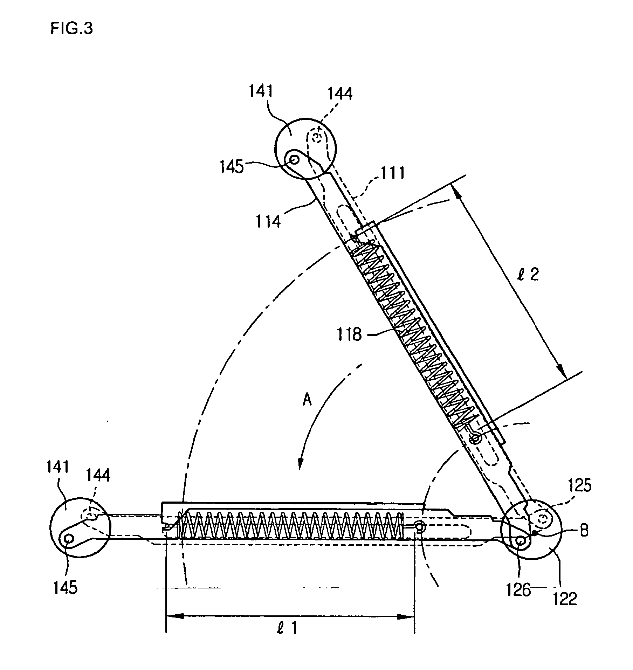

Fig. 3 is a view of a stand illustrating the main spring 118 interposed between the auxiliary link portion 110 and the main link 30 while moving from the position where the main link stands to the folded position. The operation of the main spring 118 will now be described with reference to Fig. 3.

Referring to Fig. 3, the main spring 118 maintains its original shrunken state while the stand stands. The main spring 118 has a minimum length 12 and exerts a minimum elastic force at the minimum length.

If a user rotates the main link 30 in the direction of arrow A in order to fold the stand, the two auxiliary links 111 and 114 are rotated in accordance with the rotation of the main link 30.

Even if the two auxiliary links 111 and 114 rotate around the center of the second base fixed bracket 122 fixed to the base portion 20, the two auxiliary links 111 and 114 do not change their lengths but only their relative positions. However, since the auxiliary links 111 and 114 have different centers of rotation with respect to the main link 30, the auxiliary links 111 and 114 change their relative positions.

By way of further description of the operation of the main link and the auxiliary link under these circumstances, since one end of the main spring 118 fixed at a side of the main link 30 has a regular distance from the center of rotation B when the main link 30 rotates, but the two auxiliary links have eccentric rotation centers with respect to the main link 30, the other end of the spring fixed at a side of the first auxiliary link 114, in other words, the point of the second main spring protrusion 117, becomes more distant from the center of rotation B of the main link 30.

Accordingly, the main spring 118 becomes extended and the extended main spring 118 exerts an elastic force, and the elastic force of the main spring 118 operates as a force resisting a folding rotation of the main link 30. When the main link 30 is completely folded, in other words, reaches a position perpendicular to the bottom surface of the main link 30, the length of the main link 30 becomes the maximum /2 and has the maximum elastic force at the minimum length.

As described above, one end of the main spring 118 is connected to the main link 30, and the other end of the main spring 118 is connected to the auxiliary link 144. Therefore, the end of the main spring 118 does not change its relative position even if the main link 30 is rotated, and the other end of the main link 118 is lengthened if the main link 30 is folded. In accordance with the above, the tension length of the main spring 118 is decreased in comparison with the state that both ends of the main spring 118 are connected with the auxiliary link when the stand is folded. The reliability of the spring is improved if the tension length of the main spring is decreased. In addition, unlike the conventional art, no complex tools are required to install a main spring 118 in the narrow gap between the auxiliary links 114, therefore, the assembly task is conveniently possible with simple tools at a workplace.

The main link 30 is automatically fixed by a folding stopper 130 at the state that the main link 30 is folded, in other words, in a wall-mounted type, and the main link maintains the folded state. The operations by which the main link 30 is fixed to the folding stopper 130 will be described.

Furthermore, if the main link 30 is unfolded, in other words, if the stand becomes a stand type, the main link 30 is returned to a standing position by the elastic force, and a user can easily restore the position of the main link 30 by applying a slight force.

The main spring 118 of the stand is extended or decreased only by a specific side, or an auxiliary link. Accordingly, the main spring has a smaller extended length even if it is positioned at the same place in comparison with a conventional spring connected between the link and the link and whose ends are extended in both directions. Accordingly, the tension length of the main spring 118 is decreased when the stand is folded, and there is less risk of the main spring 118 exceeding its elastic limit and degrading its strength, even when the stand is maintained folded for a long time.

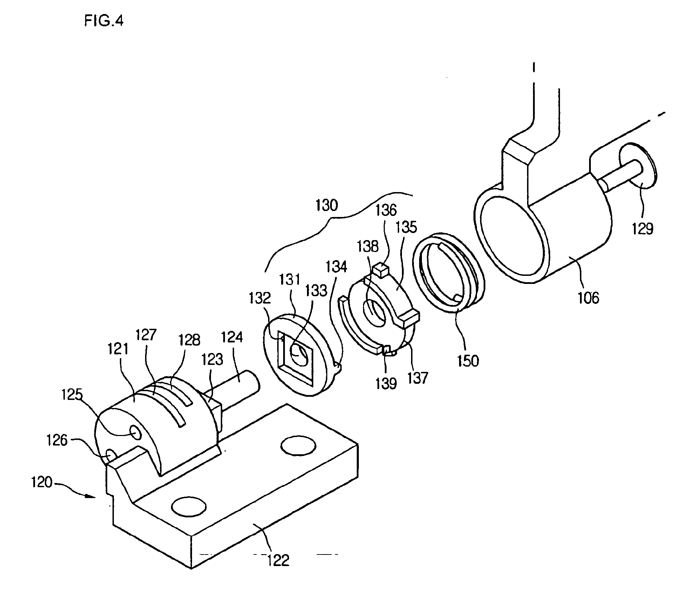

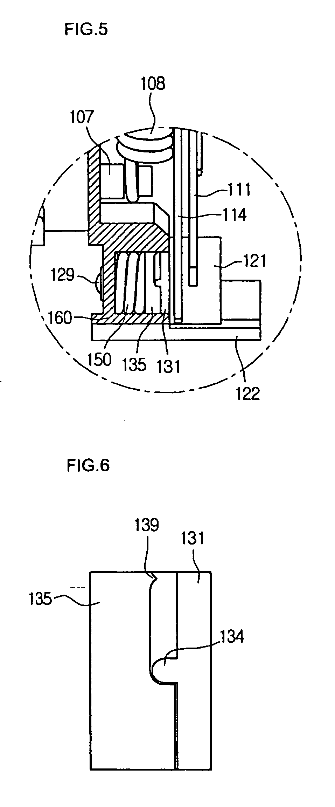

Fig. 4 is a disassembled perspective view of folding stopper 130, and Fig. 5 is a front view showing an assembled state of the folding stopper 130.

As mentioned above, the folding stopper 130 is a configuration element for automatically fixing the position of the main link 30 when the stand is folded. The configuration of the folding stopper 130 will now be described with reference to Figs. 4 and 5.

Referring to Fig. 4, the folding stopper 130 includes a latch 131 and a rotatable body 135. The latch 131 is positioned at a side of the first auxiliary link supporting portion 121 of the second base fixing bracket 122, and the rotatable body 135 is inserted in the second base hinge receiving portion 106.

The second base hinge shaft 129 sequentially penetrates the second base hinge receiving portion 106, the coil spring 150, the rotatable body 135 and the latch from a side of the second base hinge receiving portion 106 to be inserted into the second base hinge shaft receiving hole 124. In addition, a latch fixing portion 123 to which the latch 131 is fixed and the second base hinge shaft receiving portion 124 protrude at a side of the first auxiliary link fixing shaft. The second base hinge shaft receiving portion 124 is inserted through the latch shaft receiving portion 133 of the latch 131.

A fixing groove 132 is formed at a side of the latch 131. The fixing groove 132 is provided in the latch fixing portion 123, and the latch 131 does not rotate but is rotationally fixed with respect to the base portion 20.

A protuberance 134 is formed at the other surface of the latch 131 in the same direction as the direction that the second base hinge shaft receiving portion 124 protrudes. It is preferable but not essential that the protuberance 134 is formed at an outer surface of the latch 131.

The folding stopper 135 includes a rotatable body 135 rotatable along with the main link as a member corresponding to the latch 131. A rotatable shaft receiving portion 138 is formed at the center of the rotatable body 135. The rotatable body shaft receiving portion 138 is rotatably mounted on the second base hinge shaft receiving portion 124. The rotatable body 135 contacts with the latch 131 at least one point. The rotatable body 135 has a protrusion 136 on its outer circumference, and the protrusion 136 is fixed in the second base hinge receiving portion 106. Accordingly, the rotatable body 135 rotates together when the main link 30 is rotated.

A radially perforated portion 137 is formed at a side of the rotatable body 135 contacting with the latch 131 so that the protuberance 134 of the latch 131 can move when the rotatable body 135 is rotated.

The radially perforated portion 137 is provided with a groove dug inwardly of the rotatable body 135 with an extended groove shape having the same height as the protruded height of the protuberance 134 of the latch 131 in a circumferential direction.

Referring to Fig. 5, an end of the radially perforated portion 137 is formed so as to engage a protuberance 134 of the latch 131 in the state that the main link 30 stands. A hitch projection 139 is formed at a side of the radially perforated portion 137.

The hitch projection 139 functions as a stop with respect to protuberance 134 of latch 131 when the rotatable body 135 is rotated with respect to the latch 131. This operation will be described more in detail.

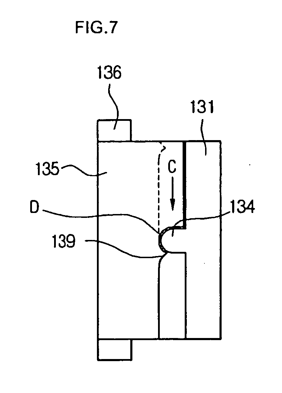

Fig. 6 is a view showing the relative positions of a latch 131 and a rotating body 135 of a folding stopper 130 in the state where the stand structure stands, in other words, in a desk-type stand, and Fig. 7 is a view showing the relative positions of a latch 131 and a rotating body 135 of a folding stopper 130 in the state where the stand structure is folded, in other words, in a wall-mounted type stand.

Referring to Figs. 6 and 7, protuberance 134 of latch 131 is contacted with an inner side of radially perforated portion 137 of rotatable body 135 in the state that the stand stands. Next, if the stand is folded and a main link 30 is rotated, rotating body 135 rotates in the direction of arrow C along with the main link 30.

As the rotatable body 135 rotates, radially perforated portion 137 of rotatable body 135 moves, passing through the protuberance 134 of the latch 131. In detail, the radially perforated portion 137 guides the protuberance 134 and as the rotatable body 135 is rotated, a hitch projection 139 formed at a lower side of the radial perforated portion 137 gets close to the protuberance 134.

Next, the hitch projection 139 passes through the protuberance 134 and has a predetermined force applied thereto.

At this time, the force applied by the user is operated as a force tending to compress the coil spring 150, more particularly, the force extended on the hitch projection 139 pushes the rotatable body 135 in a sideways direction, i.e. a left direction with reference to Fig. 6, as the protuberance 134 passes the hitch projection 193, and the force pushing the rotatable body 135 is operated as a force tending to contract the coil spring 150. Of course, the coil spring 150 returns to its original state when the protuberance 134 has completely crossed the hitch projection 139.

If sufficient force is applied to make the protuberance cross the hitch projection, the main link 30 is completely folded. At this time, as shown in Fig. 7, if the protuberance 134 formed on the latch 131 crosses the hitch projection 139 of the rotating body 135, it is mounted at a mount groove D formed at an end of radially perforated portion 137 of the rotatable body 135. It is preferable but not essential that the force that the hitch projection 139 exerts to support protuberance 134 of latch 131 is larger than the elastic force supporting the folding of the main spring 118 established on an auxiliary link, and if an external force is not applied at the folded state, it is desirable that the folded state is not disturbed.

The main link 30 of the stand due to the above operation is attached to folding stopper 130 positioned at a lower portion of the main link 30, therefore rotation of the main link is inhibited.

In other words, when the main link 30 is folded, the folding state is automatically maintained. Accordingly, the user does not use any additional lock devices mounted on a base portion such as a conventional stand, and can attain the folded state of the main link by applying a predetermined force to the main link.

In the meantime, the user unfolds the main link 30 by pulling the main link 30 in the opposite direction to the time of folding with more force than the predetermined force which was required to fold the main link 30. This is because the protuberance 134 of the latch 131 to which a mount groove is mounted in the radial perforated portion of the rotating body at folding, and the applied force acts as a force compressing the coil spring 150. In addition, after the protuberance 134 has passed the hitch projection 139, the main spring 118 mounted on an auxiliary link applies an elastic force corresponding to a folding to the main link 30, therefore, the main link 30 returns to its original position where the stand stands without the exertion of additional force by the user.

The stand having the above configuration has the property of preventing a tension spring in an auxiliary link from becoming degraded, even if the main link remains in the folded state for a long time.

In addition, in the stand in accordance with the present embodiment, the main link becomes automatically fixed in position without the need to provide an additional fixing device to the base portion in order to lock the main link of the stand if the stand is folded. Therefore, the main link is automatically locked to simplify the structure of the stand to provide the effect of convenient folding and unfolding of the stand.

While embodiments of the present invention have been described by way of example, various changes and modifications are possible without departing from the scope of the invention. It should be appreciated that the scope of the invention is not limited to the detailed description of the invention hereinabove, which is intended merely to be illustrative, but rather comprehends the subject matter defined by the following claims.

For example, as described, one end of the main spring is fixed to an auxiliary link, and the other end is fixed to the main link, but the present invention is not limited to this. One end can be fixed to the auxiliary link and the other end mounted to any member to which a center of rotation is fixed with respect to a main link. In addition, a protrusion for fixing a main spring has been described, but in a modification it is possible to form a groove in the body of the auxiliary link and to directly install it in the groove.

In another instance in the present embodiment, a restoring force is applied when the rotatable body is moved by the coil spring, but a hitch projection and a protuberance can be connected to be engaged by a spacing of the latch and the rotatable body and a position change of a product provided by tolerance without a coil spring. Furthermore, the elastic member of a coil spring applying force to the rotatable body is not limited to the coil spring shown in the embodiments, but a torsion spring or another elastic member can be employed. In addition, the coil spring has been described having a shape supporting a rotatable body, but may be provided as a type supporting the latch.

## Claims

1. A stand of display device (2) comprising:
a supporting portion (10) arranged to support a rear surface of a display device (2);
a base (20);
a main link portion (30) connected to the supporting portion (10) and the base by a hinge (140, 80), respectively such that the supporting portion (10) is rotatable with respect to the base (20);
an auxiliary link portion (110) connected to the supporting portion and the base by a hinge (14, 40, 141) for adjusting an angle of rotation of the main link portion; charaterised by
an elastic member (118) respective ends of which are connected to the auxiliary link portion (110) and the main link portion (30), respectively, and arranged for controlling vertical movement of the display device (2).

2. The stand of claim 1, wherein the auxiliary link portion (110) is operated as a parallelogram link by the auxiliary link (110) for maintaining a tilt angle of the display device (2) regardless of the movement of the main link.

3. The stand of claim 1, wherein an end portion of the auxiliary link (110) is supported at an eccentric position with respect to a center of rotation of the main link portion (30).

4. The stand of claim 1, wherein the supporting portion (10) and the display device (2) are movably connected by a hinge (14, 102, 182, 184).

5. The stand of claim 1, wherein the elastic member (110) is arranged to connect at least one auxiliary link (114) configuring the auxiliary link portion (110) and a side (107) of a main link (30) close to the base (20).

6. The stand of claim 1, further comprising a stopping portion (130) for maintaining the folded state when the main link portion (30) is folded.

7. The stand of claim 6, wherein the stopping portion (130) comprises:
a rotatable body (135) arranged to rotate along with the main body (30) ;
a latch (131) arranged to lock the location with respect to the base; and
a pair of prominence (134) and depression portions (139) provided on the rotating body and the latch, respectively, and arranged to be engaged with each other when the stand is in the folded state.

8. The stand of claim 7, wherein the prominence (134) and depression (139) portion contact each other with a slight inclination with respect to a direction of rotation of the rotatable body (135).

9. The stand of claim 7, wherein a coil spring (150) is provided and arranged for elastically supporting the rotating body or the latch when the prominence and depression portion engage each other.

10. The stand of claim 7, wherein the prominence and depression portion comprises:
a hitch projection (139) provided on the rotating body; and
a protrusion (134) provided on the latch.

11. The stand of claim 10, wherein an end of the hitch protection (139) is configured as a cusp.

12. The stand of claim 1, wherein the elastic member (118) is arranged to apply a restoring force in a direction for unfolding the folded main link portion.

## Patentansprüche

1. Ständer einer Anzeigevorrichtung (2), Folgendes aufweisend:
einen Stützabschnitt (10), der dazu eingerichtet ist, eine Rückseite einer Anzeigevorrichtung (2) abzustützen;
einen Sockel (20);
einen Hauprverbindungsabschnitt (30), der durch ein Drehgelenk (140, 80) mit dem Stützabschnitt (10) und dem Sockel jeweils so verbunden ist, dass der Stützabschnitt (10) bezüglich des Sockels (20) drehbar ist;
einen Zusatzverhindungsabschnitt (110), der durch ein Drehgelenk (14, 40, 141) mit dem Stützabschnitt und dem Sockel verbunden ist, um einen Drehwinkel des Hauptverbindungsabschnitts einzustellen; **gekennzeichnet durch**
ein federelastisches Teil (118), von dem jeweilige Enden mit dem Zusatzverbindungsabschnitt (110) bzw. dem Hauptverbindungsabschnitts (30) verbunden sind und das dazu eingerichtet ist, eine vertikale Bewegung der Anzeigevorrichtung (2) zu steuern.

2. Ständer nach Anspruch 1, wobei der Zusatzverbindungsabschnitt (110) durch die Zusatzverbindung (110) als Parallelelogramm-Verbindung betätigt wird, um einen Kippwinkel der Anzeigevorrichtung (2) ungeachtet der Bewegung der Hauptverbindung aufrechtzuerhalten.

3. Ständer nach Anspruch 1, wobei ein Endabschnitt der Zusatzverbindung (110) an einer außermittigen Stelle im Hinblick auf einen Drehmittelpunkt des Hauptverbindungsabschnitts (30) gehaltert ist.

4. Ständer nach Anspruch 1, wobei der Stützabschnitt (10) und die Anzeigevorrichtung (2) durch ein Drehgelenk (14, 102, 182, 184) beweglich verbunden sind.

5. Ständer nach Anspruch 1, wobei das federelastisches Teil (118) dazu eingerichtet ist, mindestens ein Zusatzgelenk (114), das den Zusatzverbindungsabschnitt (110) konfiguriert, und eine Seite (107) der Hauprverbindung (30) nahe dem Sockel (20) zu verbinden.

6. Ständer nach Anspruch 1, darüber hinaus einen Anschlagabschnitt (130) aufweisend, um den geklappten Zustand aufrechtzuerhalten, wenn der Hauptverbindungsabschnitt (30) geklappt ist.

7. Ständer nach Anspruch 6, wobei der Anschlagabschnitt (130) aufweist:
einen drehbaren Körper (135), der dazu eingerichtet ist, sich zusammen mit dem Hauptkörper (30) zu drehen;
eine Einrastvorrichtung (131), die dazu eingerichtet ist, die örtliche Lage im Hinblick auf den Sockel zu arretieren; und
ein Paar bestehend aus einem erhöhten Abschnitt (134) und einem vertieften Abschnitt (139), die am Drehkörper bzw. der Einrastvorrichtung vorgesehen und dazu eingerichtet sind, miteinander in Eingriff zu gelangen, wenn der Ständer im geklappten Zustand ist.

8. Ständer nach Anspruch 7, wobei der erhöhte Abschnitt (134) und der vertiefte Abschnitt (139) einander mit einer leichten Neigung im Hinblick auf eine Drehrichtung des drehbaren Körpers (135) berühren.

9. Ständer nach Anspruch 7, wobei eine Spiralfeder (150) vorgesehen und dazu eingerichtet ist, den Drehkörper oder die Einrastvorrichtung federnd zu haltern, wenn der erhöhte und vertiefte Abschnitt ineinander eingreifen.

10. Ständer nach Anspruch 7, wobei der erhöhte und vertiefte Abschnitt aufweist:
einen Greiferansatz (139), der am Drehkörper vorgesehen ist; und
einen Versprung (134), der an der Einrastvorrichtung vorgesehen ist.

11. Ständer nach Anspruch 10, wobei ein Ende des Greiferansatzes (139) als Spitze gestaltet ist.

12. Ständer nach Anspruch 1, wobei das federelastische Teil (118) dazu eingerichtet ist, eine Rückstellkraft in einer Richtung anzulegen, um den geklappten Hauptverbindungsabschnitt auseinander zu klappen.

## Revendications

1. Support pour dispositif de visualisation (2) comprenant:
une portion de support (10) agencée pour supporter une surface arrière d'un dispositif d'affichage (2);
une base (20);
une portion de liaison principale (30) reliée à la portion de support (10) et à la base par une articulation (140, 80), respectivement de telle sorte que la portion de support (10) peut tourner par rapport à la base (20);
une portion de liaison auxiliaire (110) reliée à la portion de support et à la base par une articulation (14, 40, 141) pour ajuster un angle de rotation de la portion de liaison principale; **caractérisé par**
un élément élastique (118) dont les extrémités respectives sont reliées à la portion de liaison auxiliaire (110) et à la portion de liaison auxiliaire (110) et à la portion de liaison principale (30), respectivement, et agencé pour commander le mouvement vertical du dispositif de visualisation (2).

2. Support selon la revendication 1, où la portion de liaison auxiliaire (110) est amenée à fonctionner comme liaison en parallélogramme par la liaison auxiliaire (110) pour maintenir un angle de basculement du dispositif de visualisation (2) quel que soit le mouvement de la liaison principale.

3. Support selon la revendication 1, où une portion d'extrémité de la liaison auxiliaire (110) est supportée à une position excentrique par rapport à un centre de rotation de la portion de liaison principale (30).

4. Support selon la revendication 1, où la portion de support (10) et le dispositif d'affichage (2) sont reliés d'une manière mobile par une articulation (14, 102, 182, 184).

5. Support selon la revendication 1, où l'élément élastique (110) est agencé pour relier au moins une liaison auxiliaire (114) configurant la portion de liaison auxiliaire (110) et un côté (107) d'une liaison principale (30) proche de la base (20).

6. Support selon la revendication 1, comprenant en outre une portion d'arrêt (130) pour maintenir l'état plié lorsque la portion de liaison principale (30) est pliée.

7. Support selon la revendication 6, où la portion d'arrêt (130) comprend:
un corps de rotation (135) agencé pour tourner conjointement avec le corps principal (30);
un loquet (131) agencé pour verrouiller l'emplacement par rapport à la base; et
une paire de portions en saillie (134) et en creux (139) réalisées sur le corps tournant et le loquet, respectivement, et agencées pour être mises en prise lorsque le support se trouve à l'état plié.

8. Support selon la revendication 7, où la portion en saillie (134) et la portion en creux (139) viennent en contact avec une légère inclinaison par rapport à une direction de rotation du corps de rotation (135).

9. Support selon la revendication 7, où un ressort hélicoïdal (150) est prévu et agencé pour supporter élastiquement le corps de rotation ou le loquet lorsque les portions en saillie et en creux viennent en prise.

10. Support selon la revendication 7, où la portion en saillie et en creux comprend:
une saillie d'accrochage (139) réalisée sur le corps tournant; et
une saillie (134) réalisée sur le loquet.

11. Support selon la revendication 10, où une extrémité de la saillie d'accrochage (139) a une forme de cuspide.

12. Support selon la revendication 1, où l'élément élastique (118) est agencé pour appliquer une force de rappel dans une direction pour déplier la portion de liaison principale pliée.
